(19) Europäisches Patentamt
European Patent Office
Office européen des brevets

(11) **EP 4 570 748 A1**

(12) **EUROPEAN PATENT APPLICATION**

(43) Date of publication:
**18.06.2025  Bulletin 2025/25**

(21) Application number: **24166705.4**

(22) Date of filing: **27.03.2024**

(51) International Patent Classification (IPC):
**C01B 25/37** (2006.01)    **C01B 25/45** (2006.01)

(52) Cooperative Patent Classification (CPC):
**C01B 25/45; C01B 25/377;** C01P 2006/40;
H01M 4/366; H01M 4/5825; H01M 4/625;
Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **14.12.2023  CN 202311726059**

(71) Applicant: **Eve Power Co., Ltd.**
**Jingmen, Hubei 448000 (CN)**

(72) Inventors:
• **Gao, Jianxing**
  **Jingmen, Hubei 448000 (CN)**

• **Liu, Fanfen**
  **Jingmen, Hubei 448000 (CN)**
• **Wen, Shengyao**
  **Jingmen, Hubei 448000 (CN)**
• **Wu, Tingting**
  **Jingmen, Hubei 448000 (CN)**
• **Chen, Meng**
  **Jingmen, Hubei 448000 (CN)**
• **Zhao, Yiwen**
  **Jingmen, Hubei 448000 (CN)**

(74) Representative: **Petraz, Gilberto Luigi et al**
**GLP S.r.l.**
**Viale Europa Unita, 171**
**33100 Udine (IT)**

(54) **IRON MANGANESE PHOSPHATE PRECURSOR, PREPARATION METHOD THEREOF, AND APPLICATION THEREOF**

(57)    Disclosed in the present disclosure is an iron manganese phosphate precursor and preparation method thereof and application thereof. The preparation method includes: adding phosphorus source, organic manganese source and organic iron source to organic solvent to obtain a mixed solution; dissolving doping element compounds into water, adding starch therein, and heating until being gelatinized to form a sol; mixing the mixed solution and the sol under heating conditions to obtain a mixed system, adjusting alkalinity of the mixed system, and carrying out a reaction; and drying and calcining after the reaction to obtain an iron manganese phosphate precursor.

EP 4 570 748 A1

## Description

### Field

The present disclosure relates to the preparation field of lithium iron manganese phosphate material and, particularly, to an iron manganese phosphate precursor, a preparation method thereof, and an application thereof.

### Background

Lithium iron manganese phosphate (LFMP) material, providing a higher discharging platform, may offer a higher energy density than that of lithium iron phosphate and provide the same safety performance as that of lithium iron phosphate, so as to become an upgraded substitute for lithium iron phosphate. However, lithium iron manganese phosphate material also has relatively obvious disadvantages, on the one hand, namely its low electronic conductivity and lithium-ion diffusion coefficient, and on the other hand, as well as its unsatisfactory cycling performance. Due to the Jahn-Teller effect in the material during the charge-discharge process, the collapse of the structure causes the capacity decay during the charge-discharge process. Currently, morphology control, ion dopant, and surface coating are effective ways to optimize the conductivity and cycling performance of LMFP materials. The particle size, morphology and crystal orientation of the synthesized materials are effectively controlled by optimizing the synthesis method of the cathode materials, which is closely related to the kinetics of the electrochemical reaction and significantly affects the electrochemical performance of the LMFP materials.

In addition, it has been shown by studies that the Mn/Fe ratio determines the energy density and electrochemical performance of LMFP materials to a certain extent, and the cycling stability of the material is better when Mn/Fe=6:4, at which time the average voltage thereof is around 3.65V and it provides a high energy density. Therefore, the synthesis of LMFP materials with precise Mn/Fe ratios is also critical to improving the electrical properties of the materials.

The solid-phase method is commonly used to synthesize LMFP materials, and the method is popular in industry because of its simple synthesis process and low cost. However, it is not easy to disperse the raw materials evenly during the mixing process. LMFP materials contain two kinds of transition metal ions, which are likely to form metal ion clustering during the synthesis process, resulting in inhomogeneous growth of grains. Therefore, the ratio of manganese to iron is difficult to synthesize accurately, and the content of doping element compounds is not precisely regulated, rendering the discharge capacity difficult to be utilized. EP4245721 A1 discloses a method for preparing a lithium iron manganese phosphate precursor, comprising the following steps:(a) providing a first mixed solution containing a manganese source, an iron source, and optionally an M source; providing a second mixed solution containing a phosphorus source and an ammonia source; providing a third mixed solution containing a complexing agent and a first carbon source; adding the first mixed solution and the second mixed solution into the third mixed solution for coprecipitation reaction to obtain first slurry; (c) and carrying out solid-liquid separation and washing on the first slurry to obtain a lithium iron manganese phosphate precursor. CN115477295 discloses a method for preparing a lithium iron manganese phosphate precursor by spray combustion, comprising the following steps: (1) dissolving the manganese source, iron source, and phosphorus source in an organic solvent to obtain an organic solution; (2) adding a surfactant and a combustion promoter to the organic solution to obtain a mixed solution; (3) performing spray combustion on the mixed solution to obtain the lithium iron manganese phosphate precursor.

### Summary

In order to solve the technical problem mentioned above, the objective of the present disclosure is to provide an iron manganese phosphate precursor, a preparation method thereof, and an application thereof. The preparation method employs starch-based gel as a liquid-phase medium to obtain iron manganese phosphate precursors with more accurate Mn/Fe ratios and content of doping element compounds, as well as more homogeneous distribution of the elements. The lithium iron manganese phosphate material prepared using the iron manganese phosphate precursor as a raw material offers good electrochemical performance.

As a first aspect, provided in the present disclosure is a preparation method of an iron manganese phosphate precursor, including following steps:

step 1: adding phosphorus source, organic manganese source and organic iron source to organic solvent to obtain a mixed solution;

step 2: dissolving doping element compounds into water, adding starch therein, and heating until being gelatinized to form a sol;

step 3: mixing the mixed solution in step 1 and the sol in step 2 under heating conditions to obtain a mixed system, adjusting the mixed system to alkaline, and carrying out a reaction; and

step 4: drying and calcining after the reaction to obtain an iron manganese phosphate precursor; wherein in step 1, the organic iron source comprises ferric acetate, and the organic manganese source comprises manganese acetate.

As a second aspect, provided in the present disclosure is an iron manganese phosphate precursor, including the iron manganese phosphate precursor prepared by the preparation method mentioned above.

As a third aspect, provided in the present disclosure is an application of iron manganese phosphate precursor in preparing lithium iron manganese phosphate material.

Since starch sol is employed as a medium in the present disclosure, the branched molecules of gelatinized starch are able to bind $Mn^{2+}$ and $Fe^{2+}$ ions, so that $Mn^{2+}$ and $Fe^{2+}$ ions may be evenly dispersed in the sol, which reduces the segregation of $Mn^{2+}$ and $Fe^{2+}$ ions, and is conducive to a more accurate Mn/Fe ratio as well as improved uniformity in the distribution of Mn and Fe elements. The dopant elements may also be dispersed uniformly in the sol, which reduces the segregation of dopant elements and is conducive to the precise regulation of the content of dopant elements, as well as to the improvement of the uniformity of dopant element distribution. Moreover, the manganese source and the iron source of the present disclosure are organic manganese source and organic iron source, respectively, and are formed into a mixed solution in an organic solvent, which is capable of dissolving the organic manganese source and the organic iron source. Also, the organic solvent is capable of dissolving the doping element compounds, and the distribution of the dopant elements is more homogeneous, which is more conducive to the subsequent accurate and homogeneous mixing of the dopant elements into the iron manganese phosphate precursor. In the present disclosure, the mixed system after mixing the metal salt solution and the sol in step 3 is alkaline. Under alkaline conditions, the stability of the sol is increased, and the homogeneity of $Mn^{2+}$ and $Fe^{2+}$ ions and the dopant elements in the mixed system is further improved, so as to reduce the segregation of the metal elements. Further, the lithium iron manganese phosphate is prepared from the iron manganese phosphate precursor as a raw material obtained by the preparation method of the present disclosure, and the lithium iron manganese phosphate prepared is likely to form crystals of uniform size, which is more conducive to the complete performance of the capacity. The steps in the preparation method of the present disclosure function synergistically to achieve higher energy density and better electrochemical performance of the lithium iron manganese phosphate material obtained from the iron manganese phosphate precursor as a raw material.

**Detailed description of the examples**

In one implementation, in step 1, taking an amount of substance of element phosphorus in the phosphorus source as a, an amount of substance of element iron in the organic iron source as b, and an amount of substance of element manganese in the organic manganese source as c, a/(b+c)=0.95%-1.02%, in which the value of a/(b+c) may be, but is not limited to the values listed below, such as 0.95%, 0.98%, 1%, and 1.02%, and other values in the range but not listed are also applicable.

In one implementation, in step 1,

the organic iron source includes ferric acetate;
and/or the organic manganese source includes at least one of manganese acetate and manganese oxalate,
and/or the phosphorus source is phosphoric acid,
and/or the organic solvent includes at least one of ethanol, propanol, and methanol.

In the present implementation, the organic iron source includes ferric acetate, which is more soluble in organic solvents for a more even distribution; and/or the organic manganese source includes at least one of manganese acetate and manganese oxalate, which is more soluble in organic solvents for a more even distribution; and/or the organic solvent includes at least one of ethanol, propanol, and methanol. Using an organic alcohol solvent allows better dissolution of organic iron and organic manganese sources, leading to a uniform distribution, and the subsequent dopant elements are also fully compatible with the organic alcohol solvent. Compared with water, starch gelatinized into sol is more easily soluble in organic alcohol solvent, leading to the sol being more homogeneous.

In one implementation, in step 2, a dopant element in the doping element compounds includes at least one of Zr, Mg, Gr, V, and Ti.

In one implementation, in step 2, the starch is at least one of sweet potato starch, corn starch, and modified starch.

In one implementation, in step 2, a mass of the starch is 1.0wt%-5wt% of a mass of the water, which may be, but is not limited to the values listed below, such as 1.0wt%, 2.0wt%, 3.0wt%, 4.0wt%, and 5.0wt%, and other values in the range but not listed are also applicable.

In the present solution, a mass of the starch is 1.0wt%-5wt% of a mass of the water. Within the range, after heating, the starch is gelatinized (hydrogen bonds are broken) and the structural stability of the sols obtained from the preparation is better. A stable sol environment is provided as a medium in which the metal ions are bound to the carbon chains, in which the metal ions are distributed more homogeneously, allowing for an improvement in metal ion segregation.

Also, the viscosity of the mixed system obtained by mixing the sol and the mixed solution is moderate, which further facilitates the reaction to obtain the iron manganese phosphate precursor with accurate manganese-iron ratio and dopant element content.

In one implementation, in step 2, the heating is heating to 70°C-90°C, which may be, but is not limited to the values listed below, such as 70°C, 75°C, 80°C, 85°C, and 90°C, and other values in the range but not listed are also applicable.

In one implementation, in step 3, pH of the alkaline mixed system is 9-11, which may be, but is not limited to the values listed below, such as 9, 10, and 11, and other values in the range but not listed are also applicable.

In one implementation, in step 4, the drying is specified as: drying at a rate of 2-5°C/min to increase the temperature to 100°C-200°C (i.e., a drying temperature of 100°C-200°C). The temperature increasing rate may be, but is not limited to the values listed below, such as 2°C/min, 3°C/min, 4°C/min, and 5°C/min, and other values in the range but not listed are also applicable. The drying temperature may be, but is not limited to the values listed below, such as 100°C, 120°C, 140°C, 160°C, 180°C, and 200°C, and other values in the range but not listed are also applicable.

In the present solution, the specific conditions of drying are as follows: drying at a rate of 2-5°C/min to increase the temperature to 100°C-200°C. Under such drying conditions, drying the organic solvent at a low temperature is conducive to the next step of calcination to obtain iron manganese phosphate precursor with a nanoscale size particle diameter.

In one implementation, in step 4, the calcining includes a first stage and a second stage, calcination temperature of the first stage is 350-450°C, and calcination temperature of the second stage is 500-700°C. The calcination temperature of the first stage may be, but is not limited to the values listed below, such as 350°C, 380°C, 400°C, 420°C, and 450°C, and other values in the range but not listed are also applicable. The calcination temperature of the second stage may be, but is not limited to the values listed below, such as 500°C, 550°C, 600°C, 650°C, and 700°C, and other values in the range but not listed are also applicable.

The specific conditions for calcination in the present solution are: There are a first stage and a second stage. The calcination temperature of the first stage is 350-450°C, and the calcination temperature of the second stage is 500-700°C. Under such calcination conditions, elementally doped iron manganese phosphate precursors are synthesized by a treatment of medium temperature burnout of organic substances and high temperature phase formation. The precursor has a nanometer-sized particle diameter, and the lithium iron manganese phosphate material synthesized from the precursor has a porous structure, which is conducive to the improvement of the transport rate of lithium-ions in the lithium iron manganese phosphate cathode material and the improvement of the kinetic reaction.

In one implementation, in step 4, the drying time is 12-20h, which may be, but is not limited to the values listed below, such as 12h, 13h, 14h, 15h, 16h, 17h, 18h, 19h, and 20h, and other values in the range but not listed are also applicable.

In one implementation, in step 4, the calcination time in the first stage is 6-10h, which may be, but is not limited to the values listed below, such as 6h, 7h, 8h, 9h, and 10h, and other values in the range but not listed are also applicable.

In one implementation, in step 4, the calcination time in the second stage is 10-18h, which may be, but is not limited to the values listed below, such as 10h, 11h, 12h, 13h, 14h, 15h, 16h, 17h, and 18h, and other values in the range but not listed are also applicable.

In one implementation, a volume ratio of the organic solvent used in step 1 to the water used in step 2 is 1:0.5-1.5, which may be, for example, 1:0.5, 1:0.8, or 1:1.

In one implementation, a content of the phosphorus source in the organic solvent is 1-1.5mol·L$^{-1}$, which may be, for example, 1mol·L$^{-1}$, 1.2mol·L$^{-1}$, 1.27mol·L$^{-1}$, or 1.5mol·L$^{-1}$.

In one implementation, a mole ratio of the organic iron source to a dopant element in the doping element compounds is 150-250:1, which may be, for example, 200:1, 150:1, or 250:1.

In one implementation, a mole ratio of the organic manganese source to the organic iron source is 4-8:4, which may be, for example, 4:4, 6:4, or 8:4.

In one implementation, the lithium iron manganese phosphate material is coated by carbon.

Example 1

The present example provides an iron manganese phosphate precursor doped with Mg element with Mn/Fe mole ratio=6:4, the detailed preparation method thereof including:

Step 1: 381mmol of phosphoric acid, 152.4mmol of iron acetate, and 228.6mmol of manganese acetate are added to 300mL of ethanol and stirred well to form a mixed solution, in which the mole ratio of manganese acetate and iron acetate is 6:4, and the ratio of the total amount of substance of manganese and iron to the amount of substance of phosphoric acid ion is 1:1.

Step 2: 0.76mmol of Mg(NO$_3$)$_2$ is dissolved in 300mL of deionized water, and 9g of corn starch is added, which is stirred in a stirred reactor at a constant speed until a homogeneous suspension is formed, and heated to 90°C. The suspension is dissolved and gelatinized to form a sol.

Step 3: The mixed solution obtained from step 1 is added to the sol obtained from step 2 and stirred to mix well at 90°C, and a mixed system is obtained.

Step 4: The pH of the mixed system in the reactor is adjusted to 9 and stirring in the reactor is carried out at 90°C for 3h to obtain a gel.

Step 5: The stirred gel is placed in a blast drying oven, heated to 150°C at a rate of 2°C/min, dried for 12h, and the solvent is removed to obtain powder.

Step 6: The dried powder is ground and placed in a chamber muffle furnace, heated at a rate of 2°C/min and calcined at a constant temperature of 350°C for 6h to burn out the organic substances. Then, the temperature continues to increase at a rate of 2°C/min, the powder is calcined at a constant temperature of 600°C for 10h, cooled to room temperature, washed well with deionized water, and finally dried to obtain the manganese iron phosphate precursor material doped with Mg element.

Example 2

The present example provides an iron manganese phosphate precursor doped with V element with Mn/Fe mole ratio=6:4, the detailed preparation method thereof including:

Step 1: 381mmol of phosphoric acid, 152.4mmol of iron acetate, and 228.6mmol of manganese acetate are added to 300mL of methanol and stirred well to form a mixed solution, in which the mole ratio of manganese acetate and iron acetate is 6:4, and the ratio of the total amount of substance of manganese and iron to the amount of substance of phosphoric acid ion is 1:1.

Step 2: 0.76mmol of $NH_4VO_3$ is dissolved in 300mL of deionized water, and 3g of sweet potato starch is added, which is stirred in a stirred reactor at a constant speed until a homogeneous suspension is formed, and heated to 70°C. The suspension is dissolved and gelatinized to form a sol.

Step 3: The mixed solution obtained from step 1 is added to the sol obtained from step 2 and stirred to mix well at 70°C, and a mixed system is obtained.

Step 4: The pH of the mixed system in the reactor is adjusted to 10 and stirring in the reactor is carried out at 70°C for 4h to obtain a gel.

Step 5: The stirred gel is placed in a blast drying oven, heated to 100°C at a rate of 2°C/min, dried for 20h, and the solvent is removed to obtain powder.

Step 6: The dried powder is ground and placed in a chamber muffle furnace, heated at a rate of 5°C/min and calcined at a constant temperature of 400°C for 6h to burn out the organic substances. Then, the temperature continues to increase at a rate of 5°C/min, the powder is calcined at a constant temperature of 700°C for 10h, cooled to room temperature, washed well with deionized water, and finally dried to obtain the manganese iron phosphate precursor material doped with V element.

Example 3

The present example provides an iron manganese phosphate precursor doped with Zr element with Mn/Fe mole ratio=6:4, the detailed preparation method thereof including:

Step 1: 381mmol of phosphoric acid, 152.4mmol of iron acetate, and 228.6mmol of manganese acetate are added to 300mL of propanol and stirred well to form a mixed solution, in which the mole ratio of manganese acetate and iron acetate is 6:4, and the ratio of the total amount of substance of manganese and iron to the amount of substance of phosphoric acid ion is 1:1.

Step 2: 0.76mmol of $Zr(NO_3)_4$ is dissolved in 300mL of deionized water, and 15g of modified starch (Carboxymethyl starch, bought from Changzhou Shuangcheng Chemical Co., Ltd.) is added, which is stirred in a stirred reactor at a constant speed until a homogeneous suspension is formed, and heated to 80°C. The suspension is dissolved and gelatinized to form a sol.

Step 3: The mixed solution obtained from step 1 is added to the sol obtained from step 2 and stirred to mix well at 80°C, and a mixed system is obtained.

Step 4: The pH of the mixed system in the reactor is adjusted to 11 and stirring in the reactor is carried out at 80°C for 5h to obtain a gel.

Step 5: The stirred gel is placed in a blast drying oven, heated to 200°C at a rate of 5°C/min, dried for 10h, and the solvent is removed to obtain powder.

Step 6: The dried powder is ground and placed in a chamber muffle furnace, heated at a rate of 10°C/min and calcined at a constant temperature of 450°C for 6h to burn out the organic substances. Then, the temperature continues to increase at a rate of 10°C/min, the powder is calcined at a constant temperature of 500°C for 18h, cooled to room temperature, washed well with deionized water, and finally dried to obtain the manganese iron phosphate precursor material doped with Zr element.

Example 4

The present example provides an iron manganese phosphate precursor doped with Mg element with Mn/Fe mole ratio=6:4, the detailed preparation method thereof including:

In step 4 of the present example, the pH of the mixed system in the reactor is adjusted to 8. Others are the same as in Example 1.

Example 5

The present example provides an iron manganese phosphate precursor doped with Mg element with Mn/Fe mole ratio=6:4, the detailed preparation method thereof including:

In step 4 of the present example, the pH of the mixed system in the reactor is adjusted to 12. Others are the same as in Example 1.

Example 6

The present example provides an iron manganese phosphate precursor doped with Mg element with Mn/Fe mole ratio=6:4, the detailed preparation method thereof including:

In step 2 of the present example, 2.5g of corn starch is added. Others are the same as in Example 1.

Example 7

The present example provides an iron manganese phosphate precursor doped with Mg element with Mn/Fe mole ratio=6:4, the detailed preparation method thereof including:

In step 2 of the present example, 17g of corn starch is added. Others are the same as in Example 1.

Contrast Example 1

Provided in the present contrast example is an iron manganese phosphate precursor, whose detailed preparation method includes:

Step 1: 381mmol of phosphoric acid, 152.4mmol of iron acetate, and 228.6mmol of manganese acetate are added to 300mL of ethanol and stirred well to form a mixed solution, in which the mole ratio of manganese acetate and iron acetate is 6:4, and the ratio of the total amount of substance of manganese and iron to the amount of substance of phosphoric acid ion is 1:1.

Step 2: The doped metal salt solution is obtained by dissolving 0.76mmol of $Mg(NO_3)_2$ in 300mL of deionized water.

Step 3: The mixed solution obtained from step 1 is added to the doped metal salt solution obtained from step 2 and stirred and mixed homogeneously at 90°C, and a mixed system is obtained.

Step 4: The pH of the mixed system in the reactor is adjusted to 9 and stirring in the reactor is carried out at 90°C for 3h to obtain a gel.

Step 5: The stirred gel is placed in a blast drying oven, heated to 150°C at a rate of 2°C/min, dried for 12h, and the solvent is removed to obtain powder.

Step 6: The dried powder is ground and placed in a chamber muffle furnace, heated at a rate of 2°C/min and calcined at a constant temperature of 350°C for 6h to burn out the organic substances. Then, the temperature continues to increase at a rate of 2°C/min, the powder is calcined at a constant temperature of 600°C for 10h, cooled to room temperature, washed well with deionized water, and finally dried to obtain the manganese iron phosphate precursor material doped with Mg element.

Contrast Example 2

Provided in the present contrast example is an iron manganese phosphate precursor, whose detailed preparation method includes:

Step 1: 381mmol of phosphoric acid, 76.2mmol of iron sulfate, and 228.6mmol of manganese sulfate are added to 300mL of deionized water and stirred well to form a mixed solution, in which the mole ratio of manganese sulfate and iron sulfate is 6:2, and the ratio of the total amount of substance of manganese and iron to the amount of substance of phosphoric acid ion is 1: 1. Others are the same as in Example 1.

Contrast Example 3

Provided in the present contrast example is an iron manganese phosphate precursor, whose detailed preparation method includes:

Step 2: 9g of corn starch is added into 300mL of deionized water (without adding doping element compounds), which is stirred in a stirred reactor at a constant speed until a homogeneous suspension is formed, and heated to 90°C. The suspension is dissolved and gelatinized to form a sol. Others are the same as in Example 1.

Contrast Example 4

Step 2: 9g of corn starch is added into 300mL of deionized water (without adding doping element compounds), which is stirred in a stirred reactor at a constant speed until a homogeneous suspension is formed, and heated to 90°C. The suspension is dissolved and gelatinized to form a sol. Others are the same as in Contrast Example 2.

Contrast Example 5

Carbon-coated lithium iron manganese phosphate cathode materials are prepared directly (without prior preparation to obtain manganese-doped iron phosphate precursor materials) as follows:

Step 1: 381mmol of phosphoric acid, 152.4mmol of iron acetate, 228.6mmol of manganese acetate, and 194.3mmol of lithium carbonate are added to 300mL of ethanol and stirred well to form a mixed solution, in which the mole ratio of manganese acetate and iron acetate is 6:4, and the ratio of the total amount of substance of manganese and iron to the amount of substance of phosphoric acid ion is 1: 1.

Step 2: 0.76mmol of $Mg(NO_3)_2$ is dissolved in 300mL of deionized water, and 9g of corn starch is added, which is stirred in a stirred reactor at a constant speed until a homogeneous suspension is formed, and heated to 90°C. The suspension is dissolved and gelatinized to form a sol.

Step 3: The mixed solution obtained from step 1 is added to the sol obtained from step 2 and stirred to mix well at 90°C, and a mixed system is obtained.

Step 4: The pH of the mixed system in the reactor is adjusted to 9 and stirring in the reactor is carried out at 90°C for 3h to obtain a gel.

Step 5: The stirred gel is placed in a blast drying oven, heated to 150°C at a rate of 2°C/min, dried for 12h, and the solvent is removed to obtain powder.

Step 6: The dried powder is ground and placed in a chamber muffle furnace, heated at a rate of 2°C/min and calcined at a constant temperature of 350°C for 6h to burn out the organic substances to obtain the lithium iron manganese phosphate precursor. The lithium iron manganese phosphate precursor is mixed with 41970mg of glucose and placed in a nitrogen atmosphere furnace. Then, the temperature continues to increase at a rate of 2°C/min, the powder is calcined at a constant temperature of 600°C for 10h, cooled to room temperature, washed well with deionized water, and finally dried to obtain the carbon-coated manganese iron phosphate precursor material doped with Mg element.

Performance Test

The iron manganese phosphate precursors obtained by the preparation of Examples 1-7 and the Contrast Examples 1-4 are ball-milled and mixed with lithium carbonate and glucose in terms of mole ratio as follows (iron manganese phosphate precursor: lithium carbonate: glucose= 1: 0.5: 0.6), dried, under the protection of nitrogen atmosphere, sintered at 350°C for 6h. After sintering, it is ball-milled again and sintered at 600°C in $N_2$ atmosphere for 10h to obtain the carbon coated lithium iron manganese phosphate cathode materials.

The carbon coated lithium iron manganese phosphate cathode materials obtained by the preparation of Examples 1-7 and Contrast Examples 1-5 are prepared as a cathode by slurrying the carbon-coated LiFeMnPO4: PVDF (polyvinylidene fluoride): conductive carbon black = 9:0.5:0.5 (in terms of mass ratio), with the anode using lithium metal, to be assembled into a lithium-ion button cell.

Test Item

The degree of elemental segregation is measured using ICP (Inductively Coupled Plasma Emission Spectrometer).

ICP Test Method: Ten samples (0.2g each) of the carbon-coated lithium iron manganese phosphate prepared in Examples 1-7 and Contrast Examples 1-5 are taken respectively. Each carbon-coated lithium iron manganese phosphate sample is digested with 15mL of concentrated hydrochloric acid at a concentration of 37wt% (210°C for 40 min). It is taken out and slightly cooled and then filtered, and the filtrate is transferred to a 250mL volumetric flask, diluted to the scale with ultrapure water and shaken well to obtain a solution to be measured.

Inductively coupled plasma emission spectrometry is then applied to measure the content of the primary element in the solution to be measured. The average Mn:Fe mole ratio ($x=n/10$, n denotes the sum of the Mn:Fe mole ratios of the 10 samples, x denotes the average mole ratio) and variance $D_1$ thereof ($D_1=((x_1-x)^2+(x_2-x)^2+(x_3-x)^2+...+(x_{10}-x)^2)/10$, in which $x_1, x_2, x_3 ... x_{10}$ denote the Mn:Fe molar ratio of each of the 10 samples, respectively), and the content of dopant transition element ($y=m/10$, m denotes the sum of mass fractions of dopant elements in 10 samples and y denotes the average mass fraction) and variance $D_2$ thereof ($D_2=((y_1-y)^2+(y_2-y)^2+(y_3-y)^2+...+(y_{10}-y)^2)/10$, in which $y_1, y_2, y_3 ... y_{10}$ denote the mass fraction of dopant elements of each of the 10 samples, respectively), are calculated for the carbon-covered lithium iron manganese phosphate of Example 1 and Contrast Examples 1-5, and the results are shown in Table 1 below.

Table 1

| Groups | Mn:Fe mole ratio | Variance (Mn:Fe mole ratio) | Content of dopant transition element (ppm) | Variance (Content of dopant transition element) |
|---|---|---|---|---|
| Example 1 | 1.50 | 0.012 | 322 | 0.020 |
| Example 2 | 1.50 | 0.011 | 1200 | 0.021 |
| Example 3 | 1.50 | 0.012 | 700 | 0.019 |
| Example 4 | 1.47 | 0.011 | 300 | 0.032 |
| Example 5 | 1.48 | 0.013 | 290 | 0.028 |
| Example 6 | 1.53 | 0.011 | 308 | 0.048 |
| Example 7 | 1.49 | 0.012 | 315 | 0.049 |
| Contrast Example 1 | 1.37 | 0.011 | 290 | 0.195 |
| Contrast Example 2 | 1.48 | 0.012 | 302 | 0.034 |
| Contrast Example 3 | 1.50 | 0.012 | 0 | 0 |
| Contrast Example 4 | 1.50 | 0.013 | 0 | 0 |
| Contrast Example 5 | 1.51 | 0.012 | 350 | 0.035 |

As shown in Table 1, the ICP test results indicate that the mole ratios of Mn and Fe elements in Examples 1-3, and the content of dopant elements are closer to the raw material input ratios, and the uniformity of elemental distribution is high, indicating that metal ions are not clustered during the synthesis process, the growth of grains is uniform, the ratio of manganese to iron is precisely synthesized, and the content of dopant elements is also precisely regulated, as well as the elemental uniformity is improved. Compared to Example 1, in step 4 of Example 4 and Example 5, the pH of the mixed system in the reactor is adjusted to be 8 and 12, respectively, with a relatively smaller and larger pH, so that the mole ratios of the elements Mn and Fe, and the content of the dopant elements are slightly deviated from the raw material input ratios, and the uniformity of the distribution of the dopant elements is slightly lower than that of Example 1, which indicates that the metal ions is slightly clustered in the synthesizing process. Compared to Example 1, in step 2 of Example 6 and Example 7, the amount of added corn starch is 2.5g and 17g, respectively, i.e., the mass of starch is 0.83% and 5.67% of the mass of water, respectively, with a relatively less and greater amount of starch, so that the mole ratios of the elements Mn and Fe, and the amount of the dopant elements are slightly deviated from the raw material input ratios, and the uniformity of the distribution of the dopant elements is slightly lower than that of Example 1, which indicates that less starch content hardly improves the metal ion clustering, and more starch content leads to sticky mixed system obtained by mixing sol and mixed solution, which also hardly improves the metal ion clustering. Compared to Example 1, in Contrast Example 1, no starch is added to form a sol, so that the mole ratios of the elements Mn and Fe deviate significantly from the raw material input ratios, and the uniformity of the distribution of the dopant elements is also significantly lower than that of Example 1. Compared to Example 1, in step 1 of Contrast Example 2, An inorganic iron source, an inorganic manganese source, and an inorganic solvent water are used, i.e., an inorganic system is used in Contrast Example 2. Compared to the organic system of Example 1, the mole ratios of the elements Mn and Fe, and the content of the dopant elements in the inorganic system in Contrast Example 2 deviate from the raw material input ratios, and the uniformity of the distribution of the dopant elements is worse than that of Example 1. Compared to Example 1, no Mg element is doped in Contrast Example 3; compared to Contrast Example 2, no Mg element is doped in Contrast Example 4. The mole ratios of elements Mn and Fe and the uniformity of the elemental distributions of Contrast Example 3 and Contrast Example 4 are basically the same, which indicates that the effect is the same when preparing iron manganese phosphate precursor without dopant elements, both in the organic system and inorganic system. Compared to Example 1, in Contrast Example 5, carbon-coated lithium iron manganese phosphate cathode materials are prepared directly without prior preparation to obtain the corresponding iron manganese phosphate precursor. Compared to Example 1, in Contrast Example 5, the mole ratios of elements Mn and Fe, the content of the dopant elements deviate from the raw material input ratios, and the uniformity of the distribution of the dopant elements is worse than that of Example 1.

Electrical Performance Test:

Li-ion button cell capacity test conditions: 25°C, charged to 4.25V using a current of 0.1C with a cutoff current of 0.05C, and then discharged to 2.0V using a current of 0.1C to record the first discharge capacity per gram.

Li-ion button cell cycle test conditions: 25°C, charged to 4.25V using a current of 0.5C with a cutoff current of 0.05C, and then discharged to 2.0V using a current of 0.5C. The cycles are carried out according to these steps to record the capacity retention rate.

$Li^+$ diffusion coefficient test method:

The Reference 600 electrochemical workstation manufactured by GAMRY Instruments, Inc. in USA is employed to carry out the starting electrochemical impedance spectroscopy test, with lithium metal as the counter electrode and reference electrode, and the active material electrode sheet as the working electrode. Tests are performed in a 28°C-environment with a scanning frequency of 100KHz to 0.01Hz and a scanning amplitude of 5mV. Charge transfer impedance and lithium-ion diffusion rate $D_{Li}$ in the electrochemical behavior of lithium iron phosphate cathode materials are studied by testing the electrochemical impedance spectra of the material. $D_{Li}$ is calculated using the following equation:

$$D_{Li}=R^2T^2/2A^2n^4F^4C^2\sigma^2$$

R--molecular gas constant, $8.314 Pa \cdot m^3 \cdot mol^{-1} \cdot K^{-1}$
T--absolute temperature (K)
A--surface area of cathode material ($m^2$)
n--number of electrons transferred per mole of active substance
F--Faraday constant ($6485.3383 \pm 0.0083 C/mol$)
C--Lithium-ion concentration (mol/L)
$\sigma$--Warburg Coefficient

The real part of the electrochemical impedance is related to $\sigma$ by the equation:

$$Z_{Re}=R_\Omega+R_{ct}+R_w= R_\Omega+R_{ct}+\sigma \cdot \omega^{-1/2}$$

$R_\Omega$ is the ohmic impedance, $R_{ct}$ is the charge transfer impedance, and $R_w$ is the Warburg impedance. The Warburg Coefficient $\sigma$ is numerically equal to the slope of a line fitted by the real part of the electrochemical impedance ($Z_{Re}$) and the inverse of the square root of the angular frequency ($\omega^{-1/2}$).

Carbon-coated lithium iron manganese phosphate prepared from the iron manganese phosphate precursor of Examples 1-7 and Contrast Examples 1-4 and the carbon coated lithium iron manganese phosphate prepared from Contrast Example 5 are used to prepare the cathode and then assembled into a lithium-ion button cell, and the lithium-ion button cell is tested for the first discharge capacity per gram and the number of cycles when capacity is decayed to 80%, with the results as shown in Table 2 below, and the $Li^+$ diffusion coefficients are also tested, with the results as shown in Table 2 below.

Table 2

| No. | First Discharge Capacity Per Gram (mA·h/g) | Number of cycles (capacity decreasing to 80%) | $Li^+$ diffusion coefficient ($m^2$/s) |
|---|---|---|---|
| Example 1 | 154.7 | 5500 | $1.28*10^{-7}$ |
| Example 2 | 155.2 | 5600 | $1.36*10^{-7}$ |
| Example 3 | 153.9 | 5800 | $1.45*10^{-7}$ |
| Example 4 | 152.5 | 5200 | $1.39*10^{-8}$ |
| Example 5 | 150.9 | 5300 | $1.42*10^{-8}$ |
| Example 6 | 149.2 | 5250 | $1.67*10^{-8}$ |

(continued)

| No. | First Discharge Capacity Per Gram (mA·h/g) | Number of cycles (capacity decreasing to 80%) | Li$^+$ diffusion coefficient (m$^2$/s) |
|---|---|---|---|
| Example 7 | 151.5 | 5100 | 1.87*10$^{-8}$ |
| Contrast Example 1 | 135.6 | 2600 | 1.72*10$^{-10}$ |
| Contrast Example 2 | 151.6 | 5000 | 1.42*10$^{-7}$ |
| Contrast Example 3 | 152.7 | 4800 | 1.29*10$^{-8}$ |
| Contrast Example 4 | 153.2 | 4700 | 1.51*10$^{-8}$ |
| Contrast Example 5 | 152.6 | 5000 | 1.39*10$^{-8}$ |

As shown in Table 2, lithium-ion button cell assembled from the carbon-coated lithium iron manganese phosphate material prepared from the iron manganese phosphate precursor of Examples 1-3 has better first discharge capacity, better cycling performance, greater porosity, and higher lithium-ion diffusion rate. Compared to Example 1, the first discharge capacity, the number of cycles, and the lithium-ion diffusion rate of Example 4 and Example 5 are all slightly reduced compared to that of Example 1. Compared to Example 1, the first discharge capacity, the number of cycles, and the lithium-ion diffusion rate of Example 6 and Example 7 are all slightly reduced compared to that of Example 1. Compared to Example 1, in Contrast Example 1, no starch is added to form a sol, so that the mole ratios of the elements Mn and Fe deviate significantly from the raw material input ratios, and the uniformity of the distribution of the dopant elements is also significantly lower than that of Example 1 decreased. The first discharge capacity, the number of cycles, and the lithium-ion diffusion rate are all significantly reduced compared to that of Example 1. Compared to Example 1, in step 1 of Contrast Example 2, An inorganic iron source, an inorganic manganese source, and an inorganic solvent water are used, i.e., an inorganic system is used in Contrast Example 2. Compared to the organic system of Example 1, the mole ratios of the elements Mn and Fe, and the content of the dopant elements in the inorganic system in Contrast Example 2 deviate from the raw material input ratios, and the uniformity of the distribution of the dopant elements is worse than that of Example 1. The first discharge capacity, the number of cycles, and the lithium-ion diffusion rate are all reduced compared to that of Example 1. Compared to Example 1, no Mg element is doped in Contrast Example 3; compared to Contrast Example 2, no Mg element is doped in Contrast Example 4. The mole ratios of elements Mn and Fe and the uniformity of the elemental distributions of Contrast Example 3 and Contrast Example 4 are basically the same, which indicates that the effect is the same when preparing iron manganese phosphate precursor without dopant elements, both in the organic system and inorganic system. The first discharge capacity, the number of cycles, and the lithium-ion diffusion rate in Contrast Example 3 and Contrast Example 4 are substantially the same, and are all worse than that of Example 1. Compared to Example 1, in Contrast Example 5, carbon-coated lithium iron manganese phosphate cathode materials are prepared directly without prior preparation to obtain the corresponding iron manganese phosphate precursor. Compared to Example 1, in Contrast Example 5, the mole ratios of elements Mn and Fe, the content of the dopant elements deviate from the raw material input ratios, and the uniformity of the distribution of the dopant elements is worse than that of Example 1. The first discharge capacity, the number of cycles, and the lithium-ion diffusion rate are all reduced compared to that of Example 1.

In summary, it is shown that the carbon-coated lithium iron manganese phosphate cathode material prepared from the iron manganese phosphate precursor of the embodiment of the present disclosure is more stable in structure due to a more uniform distribution of the element Mn, the element Fe, and the dopant element, which will not create other heterogeneous phases with non-stoichiometric ratios, and is of higher purity, and will not be affected by heterogeneous phases in the cycling process.

**Claims**

1. A preparation method of an iron manganese phosphate precursor, comprising following steps:

   step 1: adding phosphorus source, organic manganese source and organic iron source to organic solvent to obtain a mixed solution;
   step 2: dissolving doping element compounds into water, adding starch therein, and heating until being gelatinized to form a sol;
   step 3: mixing the mixed solution in step 1 and the sol in step 2 under heating conditions to obtain a mixed system, adjusting the mixed system to alkaline, and carrying out a reaction; and
   step 4: drying and calcining after the reaction to obtain an iron manganese phosphate precursor;

wherein, in step 1,
the organic iron source comprises ferric acetate,
and the organic manganese source comprises manganese acetate.

2. The preparation method of an iron manganese phosphate precursor according to claim 1, wherein, in step 1, taking an amount of substance of element phosphorus in the phosphorus source as a, an amount of substance of element iron in the organic iron source as b, and an amount of substance of element manganese in the organic manganese source as c, a/(b+c)=0.95%-1.02%.

3. The preparation method of an iron manganese phosphate precursor according to claim 1, wherein, in step 1,

   the phosphorus source is phosphoric acid,
   and/or the organic solvent comprises at least one of ethanol, propanol, and methanol.

4. The preparation method of an iron manganese phosphate precursor according to claim 1, wherein, in step 2, a dopant element in the doping element compounds comprises at least one of Zr, Mg, Gr, V, and Ti.

5. The preparation method of an iron manganese phosphate precursor according to claim 1, wherein, in step 2, the heating is heating to 70°C-90°C.

6. The preparation method of an iron manganese phosphate precursor according to claim 1, wherein, in step 2, a mass of the starch is 1.0wt%-5wt% of a mass of the water.

7. The preparation method of an iron manganese phosphate precursor according to claim 1, wherein, in step 3, pH of the alkaline mixed system is 9-11.

8. The preparation method of an iron manganese phosphate precursor according to claim 1, wherein, in step 4, the calcining comprises a first stage and a second stage, calcination temperature of the first stage is 350-450°C, and calcination temperature of the second stage is 500-700°C.

9. The preparation method of an iron manganese phosphate precursor according to claim 1, a volume ratio of the organic solvent used in step 1 to the water used in step 2 is 1:0.5-1.5.

10. The preparation method of an iron manganese phosphate precursor according to claim 2, a content of the phosphorus source in the organic solvent is 1-1.5mol-L$^{-1}$.

11. The preparation method of an iron manganese phosphate precursor according to claim 1, a mole ratio of the organic iron source to a dopant element in the doping element compounds is 150-250:1.

12. The preparation method of an iron manganese phosphate precursor according to claim 1, a mole ratio of the organic manganese source to the organic iron source is 4-8:4.

13. An iron manganese phosphate precursor, comprising the iron manganese phosphate precursor prepared by the preparation method according to any one of claims 1-12.

14. An application of iron manganese phosphate precursor according to claim 13 in preparing lithium iron manganese phosphate material.

15. The application according to claim 14, wherein the lithium iron manganese phosphate material is coated by carbon.

Europäisches
Patentamt

European
Patent Office

Office européen
des brevets

## EUROPEAN SEARCH REPORT

**Application Number**

EP 24 16 6705

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 245 721 A1 (BEIJING EASPRING MAT TECH CO LTD [CN]) 20 September 2023 (2023-09-20) * preparation example 4; paragraphs [0095], [0114]; claim 9; example 1 * | 1-15 | INV. C01B25/37 C01B25/45 |
| X | CN 115 477 295 A (GUANGDONG BRUNP RECYCLING TECHNOLOGY CO LTD ET AL.) 16 December 2022 (2022-12-16) * claim 1; example 1 * & WO 2024/055516 A1 (GUANGDONG BRUNP RECYCLING TECHNOLOGY CO LTD [CN] ET AL.) 21 March 2024 (2024-03-21) | 1-15 | |

**TECHNICAL FIELDS
SEARCHED      (IPC)**

C01B
H01M

The present search report has been drawn up for all claims

| Place of search | Date of completion of the search | Examiner |
|---|---|---|
| The Hague | 20 September 2024 | Mattheis, Chris |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

          

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 6705

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| EP 4245721 | A1 | 20-09-2023 | CN | 113942990 A | 18-01-2022 |
| | | | EP | 4245721 A1 | 20-09-2023 |
| | | | JP | 7493105 B2 | 30-05-2024 |
| | | | JP | 2023551742 A | 12-12-2023 |
| | | | KR | 20230125080 A | 28-08-2023 |
| | | | US | 2023339756 A1 | 26-10-2023 |
| | | | WO | 2023024651 A1 | 02-03-2023 |
| CN 115477295 | A | 16-12-2022 | CN | 115477295 A | 16-12-2022 |
| | | | FR | 3139814 A1 | 22-03-2024 |
| | | | WO | 2024055516 A1 | 21-03-2024 |

EPO FORM P0459

For more details about this annex : see Official Journal of the European Patent Office, No. 12/82

**REFERENCES CITED IN THE DESCRIPTION**

**Patent documents cited in the description**

- EP 4245721 A1
- CN 115477295